# EUROPEAN PATENT SPECIFICATION

(11) **EP 3 396 045 B1**
(45) Date of publication and mention of the grant of the patent: **12.02.2020**
(21) Application number: 17168682.7
(22) Date of filing: 28.04.2017
(51) Int. Cl.: D06F 33/02, A47L 15/42, D06F 39/00

(54) **HOUSEHOLD APPLIANCE AND METHOD OF OPERATING A HOUSEHOLD APPLIANCE**
HAUSHALTSGERÄT UND VERFAHREN ZUM BETRIEB DES HAUSHALTSGERÄTS
APPAREIL MÉNAGER ET PROCÉDÉ DE FONCTIONNEMENT ASSOCIÉ

(43) Date of publication of application: 31.10.2018
(73) Proprietor: ELECTROLUX APPLIANCES AKTIEBOLAG, 105 45 Stockholm (SE)
(72) Inventor: QUATTRIN, Paolo, 33080 Porcia (IT)
(74) Representative: Electrolux Group Patents

(56) References cited:
- EP-A2- 1 030 235
- WO-A1-2009/133024
- WO-A1-2014/090767
- DE-A1- 19 505 485

## Description

### Field of the invention

The present invention relates to a household appliance and to a method of operating a household appliance.

### Background

Modern household appliances, such as washing machines, dryers, washer dryers, dish washers, refrigerators, and the like offer a plurality of functions to a user of the household appliance. Household appliances nowadays often comprise user interfaces that include a display, for example a touchscreen, and one or more mechanical input elements, such as buttons, keys, rotary knobs and the like. Such user interface allows the user to control the functions of the household appliance, for example by selecting menu items associated with functions from a menu structure, and furthermore allows the displaying of information on a particular function, for example details of a washing program, a page from a user manual for a particular function, or the progress of a running washing program.

To demonstrate the capabilities of a household appliance to a potential buyer of the household appliance, it is known to equip household appliances with a so called demonstration (or demo) mode in which a user can explore the functions of the household appliance without actually operating the household appliance, in particular without powering up the main loads of the household appliance, such as motors, heaters or pumps. As an example, in the demo mode, the user may select and start a particular washing program, whereupon the household appliance simulates the respective washing program by showing the operating parameters and the progress of the washing program without actually opening water inlets, heating water or running motors to turn the washing machine or dryer drum.

Furthermore, household appliances are known in which the testing of particular components of the household appliance, such as a pump or a motor, is possible. It is desirable that such testing is only performed by a qualified service technician. Such functions of the household appliance may for example be activated by the service technician using separate or hidden input elements.

The document DE 195 05 485 A1 describes a method of entering a programming mode of a household appliance. A programming mode for service technicians can be entered by actuating a first combination of buttons, and a programming mode for a user can be entered by actuating a second combination of buttons. In the programming mode, variable parameters can be changed. The programming mode for the user comprises only a selection of the programming functions of the programming mode for service technicians.

The document EP 1 030 235 A2 describes a household appliance that can be operated in a demonstration mode. If a certain time has passed after the occurrence of a predetermined event, the household appliance prevents the switching from the demonstration mode into a standard mode.

The document WO 2009/133024 A1 describes a household appliance that switches back into an operating mode after a service mode has been entered and a service technician has not actuated a selector within a predetermined amount of time.

As can be seen from the above, a household appliance may need to be capable of providing a plurality of significantly different functions to a user of the household appliance, including vendors and service technicians. At the same time, it is desirable to make user interfaces more compact and facilitate the use of such user interfaces. It is for example desirable to reduce the number of mechanical input elements. Under such conditions, there is a difficulty of providing to a user of the household appliance a user interface that fulfills the requirements of being compact in size, having a reduced complexity, offering an ergonomic and efficient user input and furthermore allows the offering of the plurality of significantly different functions to users of the household appliance.

Furthermore, household appliances are often exhibited in a shop by placing several household appliances side by side and activating the demo mode. After the selling hours when the shop is closed, the shop owner generally turns off the power supply to such household appliances. When powering on the household appliances next day, it is generally a time consuming procedure for the shop owner to set all household appliances into the demo mode again. On the other hand, when a household appliance is sold to a customer, it is desirable that the customer can take the household appliance into operation without having to perform a complex procedure to bring the household appliance into normal operating conditions, and in particular without having to call a service technician or the seller to make the household appliance fully operative.

It is accordingly desirable to manage the selection and operation of the functions of such household appliance efficiently, so that the functions are easy to access for the respective purpose and that misuse or erroneous operation of the household appliance are avoided.

### Summary

Accordingly, there is a need to mitigate at least some of the drawbacks mentioned above and in particular to improve the operation of a household appliance such that a user can efficiently and securely interact with the household appliance.

This need is met by the features of the independent claims. The dependent claims describe embodiments of the invention.

According to an embodiment of the invention, a household appliance comprising a controller to control the operation of the household appliance in accordance with user selectable functions and an input unit providing input elements that are actable by a user of the household appliance is provided. The input is coupled to the controller. The household appliance is operable in at least a main operating mode in which functions of the household appliance are provided to a user for selection by actuation of an input element of the input unit, and is further operable in a first access restricted operating mode and in a second access restricted operating mode. In the first access restricted operating mode, the controller provides at least one user selectable function that upon selection causes the controller to operate the household appliance in a different way than the selection of any function provided in the main operating mode. In the second access restricted operating mode, the controller provides at least one user selectable function that upon selection causes the controller to operate the household appliance in a different way than the selection of any function provided in the main operating mode, wherein at least one of the functions provided in the second access restricted operating mode is different from the functions provided in the first access restricted operating mode. In particular, the at least one function of the first access restricted operating mode may be different from the at least one function of the second access restricted operating mode. The controller is further configured to operate the household appliance in the first access restricted operating mode upon receiving from the input unit a user input that corresponds to the actuation of one or more input elements according to a first predetermined inputs sequence and to operate the household appliance in the second access restricted operating mode upon receiving from the input unit a user input that corresponds to the actuation of one or more input elements according to a second predetermined input sequence which is different from the first predetermined input sequence.

By mean of such configuration, it becomes possible to restrict the access to certain functions of the household appliance to different user groups. Operation of the household appliance by a user is facilitated, since a user at home may not be able to access the first and second access restricted operating modes, and is accordingly not confronted with the respective functions associated with these operating modes. Furthermore, the misuse or erroneous operation of the household appliance may be avoided, since different user groups may only be provided with the functions that are save to be operated by users of the respective group. An accidental operation of a function by a home user, such as an accidental activation of a demo mode or a service function may furthermore be prevented.

According to the invention, the separate first and second access restricted operating modes allow the use of separate function lists in the particular modes, and also allow the use of partially overlapping function lists.

That the input unit is coupled to the controller does not necessarily imply a mechanical coupling, it is sufficient if a signal communication between the input unit and the controller is provided. Such signal communication may for example be provided by providing an electrical or a wireless connection between the input unit and the controller.

The at least one user selectable function that is provided in the first or second access restricted operating mode may be a function that is different from the functions provided in the main operating mode, such as a diagnostic or service function which is not available in the main operating mode, or it may be the same function but its selection may result in a different operation of the household appliance, such as a washing program that is available both in the main operating mode and in the respective access restricted operating mode, but may result only in the simulation of the respecting washing cycle when selected within the access restricted operating mode. A user selectable function may for example be selectable by actuation of an input element by a user, such as by pushing a physical button or key or by actuating a graphical input element on a touchscreen.

In an embodiment, the user selectable functions that are provided in the first access restricted operating mode are different from the user selectable functions provided in the second access restricted operating mode. Accordingly, separate function lists may be provided in both access restricted operating modes, so that there is a complete separation and the respective functions can only be accessed by a user having the authorization to enter the respective operating mode.

In another embodiment, the controller is configured to provide in the first access restricted operating mode at least one user selectable function that corresponds to a user selectable function provided in the second access restricted operating mode. A particular function that may be beneficial to the users of both access restricted operating modes may thus be accessed out of each of these operating modes. As an example, such user selectable function may be a function that accesses an operating manual of the household appliance. It may for example be useful for a user operating the household appliance in a demo mode to access the operating manual, and it may similarly be beneficial for a service technician who operates the household appliance in a service mode to access the operating manual. It should be clear that more than one user selectable function may be provided in both of the access restricted operating modes, the first and second access restricted operating modes may for example comprise two, three, four, five or more functions that are the same or similar.

The first and/or second predetermined input sequence may be a code. The first and/or second predetermined input sequence may be a sequence of symbols, preferably comprising at least three, at least four or at least five symbols. As an example, the sequence may comprise between three and twelve symbols. A symbol may be an alphanumerical symbol, such as a number, a letter or the like. The input sequences may accordingly correspond to codes, and by providing a code only to a respective user group, only this user group has access to the corresponding access restricted operating mode. As an example, a code to enter and leave a demo mode may be provided to sales personal of a shop, whereas a code for entering a service mode may be provided to service technicians only. Accidental entering and/or leaving such access restricted operating mode and the accidental activation of a function not intended for the private user of the household appliance made thus be prevented.

In particular, the input unit may comprise a touchscreen, and the actuation of input elements according to the first and/or second predetermined input sequence may comprise or consist of the actuation of graphical input elements on the touchscreen in the respective sequence. As an example, graphical input elements may be provided on the touchscreen in form of numbers of a graphical number pad, and the user may enter the sequence of symbols by means of such number pad. A graphical input element may for example be provided on the touchscreen by displaying a respective button or menu item on the touchscreen and by defining a respective touch area within or around the displayed button or menu item. An input is then detected by detecting the placement of a finger of the user on such graphical input element on the touchscreen.

In an embodiment, the input unit comprises a touchscreen and at least one, preferably at least two physical input elements separate from the touchscreen. The second predetermined input sequence comprises the actuation of graphical input elements on the touchscreen. The controller may be further configured to operate the household appliance in the second access restricted operating mode upon receiving from the input unit a user input that corresponds to the actuation of input elements according to a third predetermined input sequence. The third predetermined input sequence does not comprise the actuation of graphical input elements provided on the touchscreen. In particular, the third predetermined input sequence may comprise or consist of the actuation of the one or more physical input elements, such as a button, a key, a rotary knob or the like. By means of such configuration, an additional way of entering the second access restricted operating mode can be provided, which can for example be used when the touchscreen is broken. When the household appliance has a failure or is not functioning, a service technician may thus still enter the second access restricted operating mode, in particular a service mode, even when the touchscreen is broken. On the other hand, when the touchscreen is operative, entering such mode is facilitated as it may only require the entering of the respective sequence, such as an alphanumerical code, by means of the touchscreen.

In an embodiment, the input unit comprises a touchscreen, and the controller is configured to provide in the main operating mode a menu structure on the touchscreen. Menu items of the menu structures are associated with functions of the household appliance and are selectable by respective graphical input elements. The menu structure comprises at least one menu item upon the selection of which the controller queries a user to enter the first or the second predetermined input sequence. As an example, a menu item called "services" may be provided, upon the selection of which the household appliance requests that the user enters a code. If the entered code corresponds to the first predetermined input sequence, the household appliance may operate in the first mode, such as a demo mode, and if it corresponds to the second predetermined input sequence, it may operate in the second mode, such as a service mode. The user can accordingly obtain access to two distinct operating modes by making use of only a single menu item. In other embodiments, two menu items may be provided, one for the demo mode and one for the service mode, each menu item requiring the entering of the respective predetermined input sequence.

The controller may furthermore be configured to provide upon receiving from the input unit a user input that corresponds to the actuation of input elements according to a fourth predetermined input sequence, an error message on the screen that is indicative of a malfunction experienced by the household appliance during operation. As an example, a message corresponding to the last error code or alarm code that is stored in an error memory of the household appliance may be displayed. In such configuration, a private user of the household appliance may retrieve the last error code from the error memory and is thus able to provide information about the malfunction to a service technician when asking for help.

In an embodiment, the first access restricted operating mode is a demonstration mode (or demo mode). The at least one user selectable function provide in the demonstration mode may comprise a demonstration function. The controller may be configured to simulate, upon selection of the demonstration function, operating conditions of the household appliance without operating power loads (or main loads) of the household appliance that are associated with such operating conditions. As an example, in such demo mode, normal operating conditions may be simulated on the display, i.e. the display may show the normal (or main) operating menu of the household appliance. The demo mode may furthermore allow the selection and activation of for example laundry treating programs as if the household appliance was operative. Yet upon activation of such program, the main loads of the household appliance, such as a compressor, a motor, or a heating element, will not be activated. By providing such demo mode, a user can experience the operation of the household appliance and interact with the user interface without the need to fully operate the appliance. In particular, extensive testing of the household appliance can be provided in a shop environment in which the household appliance is not connected to a water inlet, a drain or the like.

The controller may be configured such that when the household appliance operates in the first access restricted operating mode, the controller stops operation in the first access restricted operating mode and enters the main operating mode upon receiving from the input unit a user input that corresponds to the actuation of input elements according to a predetermined input sequence, in particular according to the first predetermined input sequence. Accordingly, the first mode, in particular the demo mode, may be quit by persons having knowledge of the predetermined input sequence. In such demo mode, a menu item such as "exit demo mode" or "services" may be provided, upon the selection of which the user is queried to enter the respective input sequence. When the household appliance is operated in the demo mode in a shop, a customer can thus not cause the appliance to leave the demo mode accidentally, it may only be left by a person knowing the respective input sequence.

The controller may furthermore be configured such that when the household appliance operates in the first access restricted operating mode and the household appliance is powered down and powered up again, the controller activates an input element. Actuation of the input element by a user causes the controller to leave the first access restricted operating mode and to operate the household appliance in the main operating mode. The controller activates the input element only for a predetermined amount of time after which the controller continues to operate the household appliance in the first access restricted operating mode. Accordingly, when a user purchases the household appliance and powers the household appliance up for the first time, the user can easily leave the demonstration mode by actuation of the input element without requiring a code or input sequence to leave such demo mode. Furthermore, when the household appliance is powered up in the morning in a shop, prior to the presence of any customers, the input element will not be actuated within the predetermined amount of time, so that the household appliance continues to operate in the first access restricted operating mode. A customer in the shop can thus not quit the demonstration mode, as after expiry of the predetermined amount of time, the code or input sequence needs to be entered. The predetermined amount of time may for example be equal to or smaller than two minutes, equal to or smaller than one minute, in particular equal to or less than thirty seconds, for example about ten seconds. Preferably, the input element that is activated is a graphical input element on a touchscreen. Such graphical input element may be provided together with a query or request asking the user if the user wants to leave the demonstration mode. Leaving the demo mode is thus facilitated for end customers, and the private user does not need to contact the service.

The controller may in particular be configured to activate the input element only after determining that the household appliance was disconnected (for example unplugged) from a power supply prior to the powering up of the household appliance. Disconnected means that there is no power supply to the household appliance, for example by unplugging the household appliance from the power outlet. In such configuration, it can be prevented that a customer leaves the demonstration mode of the household appliance by switching off and switching on the household appliance in the shop, without unplugging the household appliance from the power supply. When the household appliance operates in the first access restricted operating mode and is switched off, upon being switched on again, it may return to the point in the first access restricted operating mode where it was before the appliance was switched off. Additionally or alternatively, when operating in the demonstration mode, the controller may be configured to leave the first access restricted operating mode upon receiving a user input corresponding to a factory reset.

In an embodiment, the controller may comprise a memory, and the controller may be configured to store information on the active operating mode in the memory at least when the household appliance is operating in the first access restricted operating mode. The memory may be a non-volatile memory such that upon a powering down and a powering up of the household appliance, the information is retained in the memory. The controller may furthermore be configured to read the information from the memory upon powering up of the household appliance and to enter the first access restricted operating mode when the information indicates that this mode was active prior to powering down of the household appliance. The information on the active operating mode may for example be stored by setting a flag in the memory. Accordingly, it may be ensured that when the household appliance is powered up, the household appliance can determine whether or not it operated in the first access restricted operating mode, in particular in the demo mode, prior to being powered down, in respective of whether the household appliance was simply switched off, or the power to the household appliance was cut, for example by unplugging the household appliance or by disconnecting a local power grid.

For determining whether or not the household appliance has been disconnected from the power supply, the controller may comprise a volatile memory and may store a flag in the volatile memory. The volatile memory may be configured such that upon switching off and switching on the household appliance, for example by using an on/off button, the volatile memory retains its state, whereas upon a disconnection of the household appliance from the power supply, the volatile memory loses its state. Accordingly, upon a powering up of the household appliance, the household appliance can determine if it was disconnected from the power supply by reading the flag in the volatile memory. If the flag is no longer present, the controller determines that the household appliance was disconnected from the power supply.

In another embodiment, the controller is configured such that when the household appliance operates in the first access restricted operating mode, the controller determines a time elapsed from the activation of the first access restricted operating mode, compares the elapsed time with a threshold and leaves the first access restricted operating mode if the elapsed time is greater than the threshold. In such configuration, the controller may automatically quit the first mode, in particular the demo mode, after a predetermined amount of time has lapsed since the activation of the demo mode. Accordingly, no user input is required to leave the demo mode. The threshold may for example be on the order of several days, it may be between about two and about five days, for example about three days.

In an embodiment, the second access restricted operating mode is a service mode. The at least one user selectable function provided in the service mode may comprise at least one diagnostic function for testing operability of a component of the household appliance. Such service mode allows the providing of diagnostic functions to service personal that should not be accessed by the private user of the household appliance. Such diagnostic function may in particular comprise the selective activation of a component of the household appliance, the component being at least one of a valve, a pump, a heater, a display, a compressor, a motor. By such selective activation, it can be checked whether the respective component actually works. The detection of a defect of such component is thereby facilitated.

The at least one user selectable function provided in the service mode may further comprise a reporting function that upon activation provides information on malfunctions experienced by the household appliance during operation and/or may further comprise a testing function that upon activation causes the controller to perform a test procedure for testing the operability of a user interface of the household appliance, the user interface comprising at least the input unit. The user interface can for example comprise a touchscreen that forms part of the input unit, a display, LEDs (light emitting diodes), a buzzer, physical input elements such as keys, buttons, rotary knobs and the like. By such reporting function, a service technician may obtain detailed information about the operation of the household appliance.

According to a further embodiment of the present invention, a method of operating a household appliance is provided. The household appliance comprises a controller to control the operation of the household appliance in accordance with user selectable functions and an input unit providing input elements that are actuatable by a user of the household appliance. The input unit is coupled to the controller. The method comprises the steps of operating the household appliance in a main operating mode in which functions of the household appliance are provided to a user for selection by actuation of an input element of the input unit; operating the household appliance in a first access restricted operating mode upon receiving from the input unit a user input that corresponds to an actuation of one or more input elements according to a first predetermined input sequence; in the first access restricted operating mode, providing at least on user selectable function that upon selection causes the controller to operate the household appliance in a different way than the selection of any function provided in the main operating mode; operating the household appliance in a second access restricted operating mode upon receiving from the input unit a user input that corresponds to the actuation of one or more input elements according to a second predetermined input sequence, which is different from the first predetermined input sequence; and in the second access restricted operating mode, providing at least one user selectable function that upon selection causes the controller to operate the household appliance in a different way than the selection of any function provided in the main providing mode, wherein at least one of the functions provided in the second access restricted operating mode is different from the functions provided in the first access restricted operating mode.

By means of such method, advantages similar to the ones outlined further above with respect to the household appliance may be achieved. The method may be performed by a household appliance having any of the above described configurations. Furthermore, any of the method steps that are performed by the household appliance or by the controller of the household appliance may form part of embodiments of the method.

That the input unit is coupled to the controller does not necessarily imply a mechanical coupling, it is sufficient if a signal communication between the input unit and the controller is provided. Such signal communication may for example be provided by providing an electrical or a wireless connection between the input unit and the controller.

The household appliance may be selected from a group comprising or consisting of a washing machine, a dryer, a washer-dryer, and a dishwasher.

In some embodiments of the household appliance and the method, the second access restricted operating mode is optional, and the features related to the entering and leaving of the first access restricted operating mode may be provided, in particular related to the leaving of the first access restricted operating mode by powering down and powering back up again of the household appliance.

It is to be understood that the features mentioned above and those yet to be explained below can be used not only in the respective combinations indicated, but also in other combinations or in isolation, without leaving the scope of the present invention. The features of the embodiments disclosed herein can be combined with each other unless noted to the contrary.

### Brief description of the drawings

The forgoing and other features and advantages of the invention will become further apparent from the following detailed description read in conjunction with the accompanying drawings. In the drawings, like reference numerals refer to like elements.
- Fig. 1: is a schematic drawing showing a perspective view of a household appliance according to an embodiment.
- Fig. 2: is a schematic drawing showing a block diagram illustrating a user interface of a household appliance according to an embodiment.
- Fig. 3: is a schematic drawing showing a block diagram of a household appliance according to an embodiment.
- Fig. 4: is a flow diagram illustrating a method of operating a household appliance according to an embodiment.
- Fig. 5: is a schematic drawing showing graphical input elements for selecting functions of a household appliance in accordance with an embodiment.
- Fig. 6: is a schematic drawing showing graphical input elements and a query to input a predetermined input sequence on a touchscreen of an input unit of a household appliance according to an embodiment.
- Fig. 7: is a schematic drawing showing graphical input elements for selecting functions of a household appliance in a first access restricted operating mode of the household appliance.
- Fig. 8: is a schematic drawing showing a query to leave the first access restricted operating mode of the household appliance.
- Fig. 9: is a schematic drawing showing graphical input elements for selecting functions of a second access restricted operating mode of the household appliance.
- Fig. 10: is a flow diagram illustrating a method of operating the household appliance according to a further embodiment.

### Detailed description

In the following, embodiments of the invention will be described with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art.

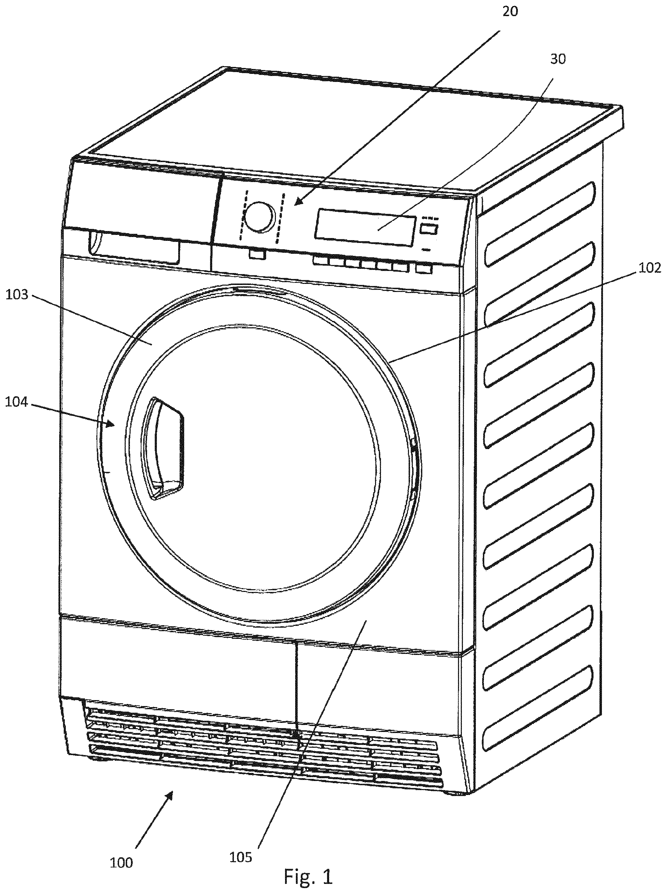

Figure 1 schematically shows a household appliance 100 in accordance with an embodiment of the invention. In the exemplary embodiments described hereinafter, the household appliance 100 is implemented as a laundry treatment apparatus, in particular as a washing machine, a dryer, a washer-dryer, or the like, but it should be clear that the teachings of the present application are similarly applicable to other household appliances. The household appliance 100 has a housing 105, in a front wall of which a loading opening 102 is provided for loading laundry into a drum (not shown) disposed inside the housing 105. The loading door 103 is provided for closing the loading opening 102, and the door 103 or a tub located inside the housing 105 can be provided with a gasket to provide sealing of the loading opening 102. Loading door 103 has a handle 104 for opening and closing the door 103. At the front side or an upper side of the household appliance 100, an user interface 20 is provided that in example of figure 1 comprises an input unit 30 that can include a touchscreen and several physical input elements, such as buttons, keys, rotary knobs and the like. An input element may also be termed operating element or control element. Household appliance 100 may furthermore comprise any other components that are common to the particular implementation of the household appliance 100, such as a drum, a motor, a pump and a drawer for the supply of a detergent when implemented as a washing machine, or heating elements, a compressor, air inlets and outlets and the like when implemented as a dryer, only to name a few.

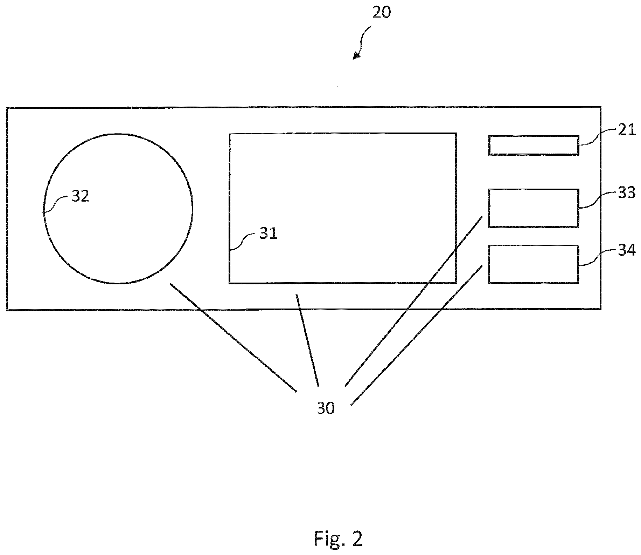

Figure 2 illustrates schematically an exemplary configuration of the user interface 20 that can be employed in the household appliance 100 of figure 1. The input unit 30 comprises a touchscreen 31, a rotary knob 32, and physical buttons or keys 33 and 34. In the example of Figure 2, input element 33 is a start/stop button, and input element 34 is an on/off button. User interface 20 may comprise further elements, such as additional physical input elements, additional display elements, such as a LED 21, and other elements that are commonly found on user interfaces of household appliances. In operation, a user may for example press the on/off button 34 to switch on the household appliance 100, select on the touchscreen 31 a particular function, such as a laundry program, and start the laundry program by actuating the start/stop button 33. In particular, the touchscreen 31 may be used to display graphical input elements that can be actuated by a user to select and activate a particular function of household appliance 100. Such functions may be provided as menu items within a menu structure, as explained in more detail further below.

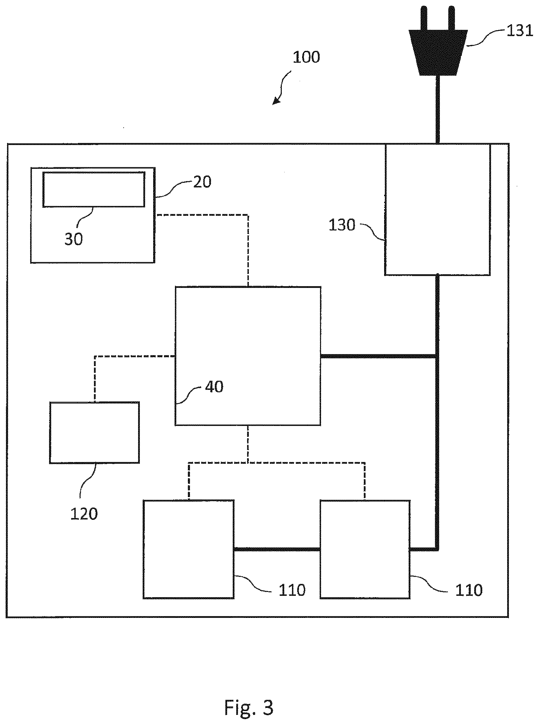

Figure 3 is block diagram illustrating the components of an embodiment of a household appliance 100. The household appliance shown in figure 1 may for example comprise the respective components illustrated in figure 3. Household appliance 100 comprises a controller 40 that controls the operation and the components of the household appliance 100. Controller 40 is implemented as an electrical circuit that may comprise a microprocessor, a signal processor, a FPGA (field programmable gate array), an ASIC (application-specific integrated circuit) or any other circuit suitable to control the operation of the household appliance 100. Controller 40 may comprise further components that are common to a controller, such as a memory, input/output interfaces for operating components and for communicating with sensors, display elements, input elements and other components of the household appliance 100, transmitters and receivers for sending and receiving signals, digital to analog and analog to digital converters and the like. Controller 40 is coupled to user interface 20 including the input unit 30, which may be configured as described with respect to figure 2. The coupling may be provided by an electrical connection, such as a cable having one or more conductors, or a wireless connection. Parts of the user interface 20 and the controller 40 may be located remote from each other, and other parts may be located adjacent to each other or may even be integrated on the same circuit board. Household appliance 100 includes a power supply unit 130 that can be connected to a power supply by means of the power plug 131, such as to a power network, for example by plugging the plug 131 into a power socket or power outlet. Power supply unit 130 supplies electrical power to the components of household appliance 100, such as to main loads 110 and to the controller 40. Power supply 130 may provide power transformation in order to provide electrical power at a lower voltage to the controller 40, while main loads 110 may be operated at a higher voltage, in particular at the power grid voltage. The power loads or main loads 110 of household appliance 100 may for example comprise a heating element for heating water, a pump for pumping water, an electrical motor for rotating a drum in a washer or washer-dryer application, or may comprise a compressor or a heating element for heating air in a dryer application.

Household appliance 100 further comprises sensors 120, which may for example sense a temperature, a water level, the presence of water, or the rotational speed of a motor. Controller 40 is coupled to the sensors 120, for example by a respective electrical connection. Sensors 120 may be provided at different locations and may be associated with different components of the household appliance 100, for example for measuring the temperature of a medium heated by a heating element, for measuring the rotational speed of a drum driven by a motor or the like.

It should be clear that the household appliance 100 may comprise further elements that are common to the particular implementation of the household appliance 100, as already indicated further above. For reasons of clarity and conciseness, such elements are not explained herein in further detail.

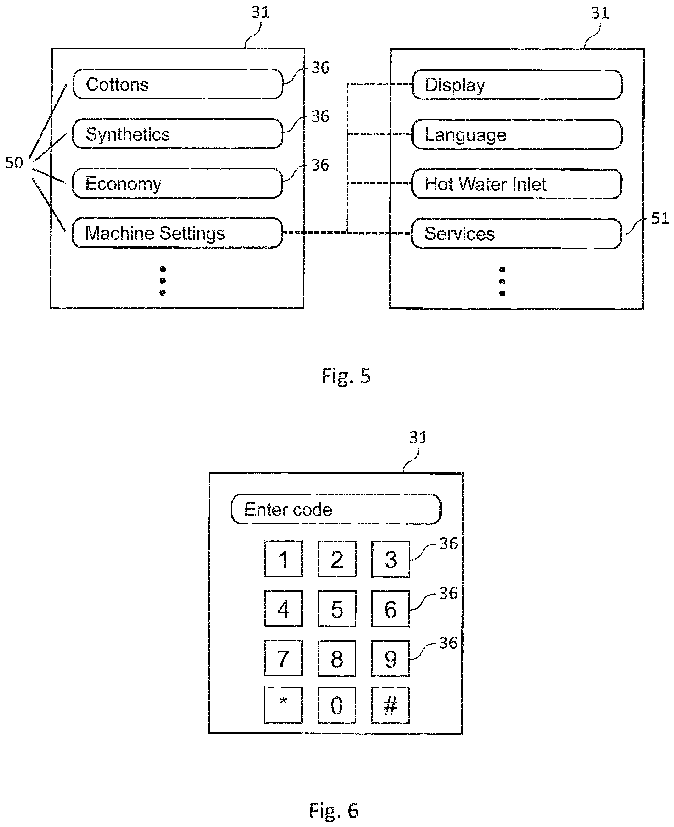

The household appliance 100 has a main operating mode that is commonly used by a private user of the household appliance 100. As an example, when the household appliance 100 is connected to the power grid and the on/off button 34 shown in figure 2 is pressed by a user of the household appliance, the controller 40 starts operation of the household appliance 100 and enters the main operating mode. In such main operating mode, the user of the household appliance may for example be provided with graphical input elements 36 on the touchscreen 31 of the user interface 20, which are exemplarily illustrated in figure 5. In such main operating mode, functions 50 of the household appliance 100 are provided to the user for selection. In figure 5, by selecting the graphical input element designated "cottons", the controller 40 may provide the user with additional information on a respective laundry program on touchscreen 31 and may allow the changing of parameters of such laundry program. Upon subsequent actuation of the start/stop button 33, the controller 40 may cause the household appliance 100 to perform the respective laundry program. In the course of such laundry program, the controller 40 controls the operation of the main loads 110, for example the switching on and off of heating elements, the operation of a motor to rotate drum at a certain speed and the like. Accordingly, when a user selects functions, such as washing or drying programs in the main operating mode of the household appliance, the controller 40 operates the main loads 110.

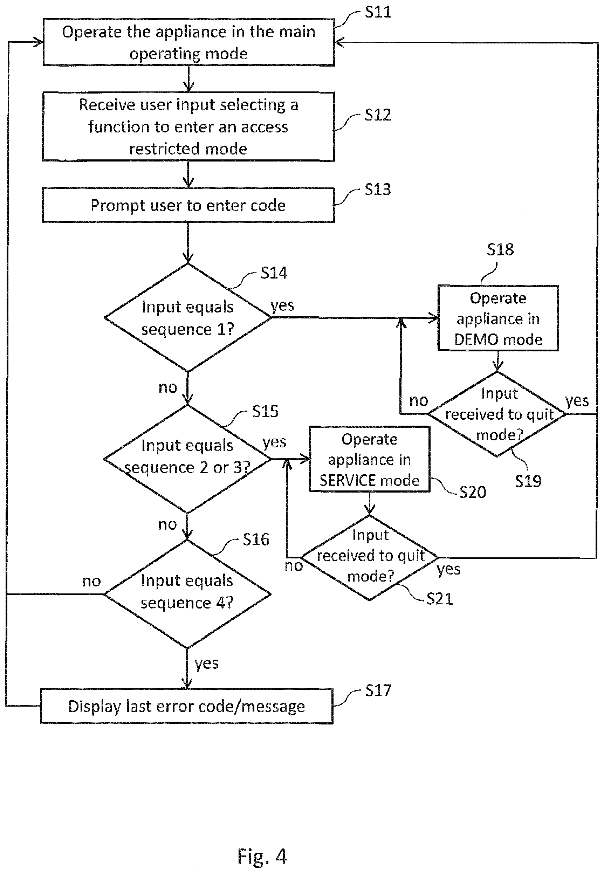

In the flow diagram of figure 4, such operation in the main operating mode is illustrated at step S11. The left hand side of figure 5 illustrates an exemplary menu structure that may be provided to a user of the household appliance in the main operating mode. Such menu structure may comprise submenus, as illustrated in figure 5 for the menu item "machine settings", upon the selection of which the submenu illustrated on the right hand side of figure 5 may be displayed. The submenu comprises a menu item 51 that is provided for allowing a user to enter a different operating mode of the household appliance 100. It should be clear that the menu item 51 may be provided at any suitable location within the menu structure of the user interface 20.

The household appliance 100 may in particular comprise a first access restricted operating mode in form of a demonstration mode or demo mode. In such demo mode, the controller 40 of the household appliance 100 may provide by means of the user interface 20 a menu structure to the user that is similar to the menu structure of the main operating mode. Yet the selection of a function of such menu structure in the demo mode causes the controller 40 to operate the household appliance in a different way than when the same function is selected in the main operating mode. In particular, the respective function, such as a laundry program or dryer program, may be simulated by the controller 40 without actually activating or operating the main loads 110 of the household appliance 100. For example, in the demo mode, a certain water temperature and rotation speed of the washer or dryer drum may be displayed to a user on the touchscreen 31, whereas the heating element and the motor for rotating the drum are in fact inoperative.

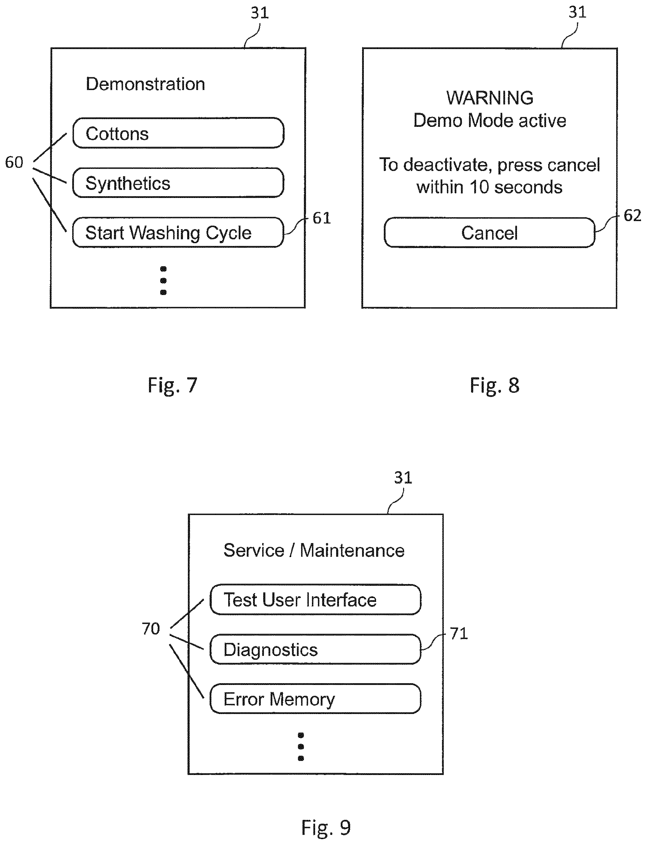

Figure 7 exemplarily illustrates such demo mode for a washing machine. Several functions 60 of the demo mode are provided for user selection on the touchscreen 31. A laundry function 61 is provided for starting a washing cycle. If such function is activated in the demo mode, only a demonstration of the respective laundry program occurs, and the program may be accelerated so that it takes only a relatively small amount of time to finalize the program. On the other hand, the same function may be provided in the respective menu of the main operating mode, yet the actuation of this function would in the main operating mode result in the actual operation of the main loads and the performing of the respective washing program.

The controller 40 is furthermore configured to operate the household appliance 100 in a second access restricted operating mode in form of a service mode. In the service mode, the controller may provide to the user of the household appliance a menu structure via touchscreen 31 which comprises functions 70 that are not available in the menu structure of the main operating mode. Such functions 70 are exemplarily illustrated in figure 9 and may include test functions, for example for testing the user interface, diagnostic functions 71 for testing particular components of the household appliance 100, functions to retrieve messages in an error memory of the household appliance 100 and the like. In particular, the service mode comprises functions the selection of which operates the household appliance 100 differently than the selection of any of the functions provided in the main operating mode. The activation of a diagnostic function may for example comprise a selective activation of a component such as a valve, one or more pumps, one or more heating elements, displays or display icons and the like. In the service mode, by selective activation of specific components, it becomes possible for a service technician to find out if one of the components is defective. Such selective activation of components is not possible by the functions provided in the main operating mode.

As a particular example, upon selection of the function "test user interface" of figure 9, the controller may check operation of the LED 21, may check a buzzer comprised in the user interface 20, may check correct operation of the touchscreen 31, in particular of the display comprised in the touchscreen 31, and may subsequently provide on the touchscreen 31 a summary of the test results. Upon selection of the function diagnostics, the service technician may be provided with a possibility to run a diagnostic program for a particular washing program. The water temperature, the water level and the spin speed used in such program may for example be tested by activating the respective components, and a summary of the diagnostic results may be provided on the touchscreen 31.

For entering such demo mode or service mode, the user can for example select the function "services" 51 illustrated in figure 5, as explained below in more detail.

Now turning back to figure 4, such user input for entering the access restricted operating mode is received by the controller in step S12. In response, the controller queries the user to enter a predetermined input sequence in form of a code (step S13). As an example, the controller may on the touchscreen provide graphical input elements 36 in form a number pad to the user and may query the user to enter the respective code, as illustrated in figure 6. Such code may for example have a length of three, four, five, six or more symbols, which may be numbers, but may also include other symbols such as alphabetic characters and the like. Responsive to such query, the user may for example enter a four digit code by means of the graphical number pad displayed on the touchscreen 31.

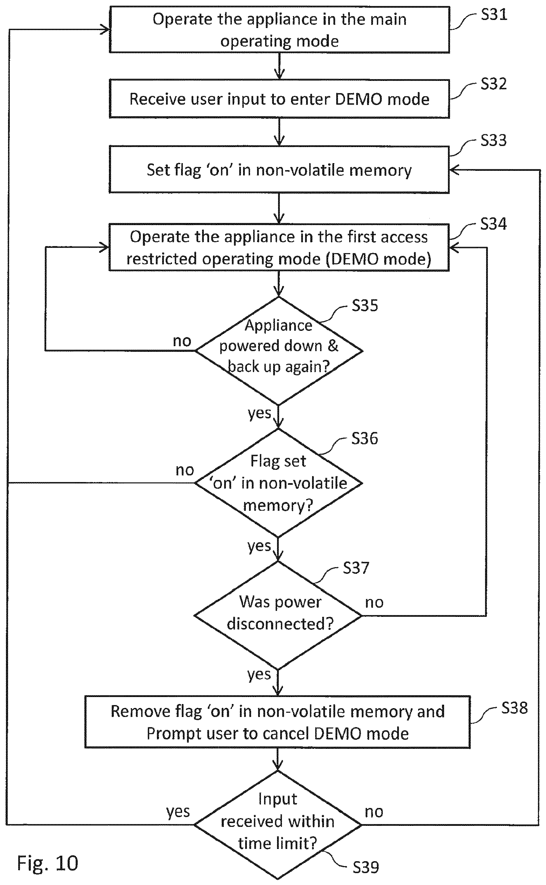

In step S14, the entered code is compared to a first predetermined input sequence. If the entered code matches a first predetermined input sequence, the appliance is operated in the demo mode (step S18). The user may thus be provided with the menu illustrated in figure 7, the functions of which may correspond to the functions available in the main operating mode to simulate the operation of the household appliance 100 upon activation of such function. Such menu may furthermore comprise a function to quit the demo mode. If such function is actuated, the user of the household appliance may again be queried to enter a respective code, which may be the same code used to enter the demo mode, or may be a different code. The query may again be made by using graphical input elements provided on the touchscreen 31, as explained above with respect to figure 6. If such input to quit the demo mode is received (step S19), the household appliance is operated in the main operating mode. It is noted that when starting the household appliance, the household appliance may directly enter the demo mode, and further ways to quit the demo mode may be provided, as described further below with respect to figure 10.

If the entered code does not match the first predetermined input sequence, it is checked in step S15 if it equals a second predetermined input sequence (sequence 2). If this is the case, then the household appliance is operated in the second access restricted operating mode, in particular in the service mode (step S20). As explained in detail above with respect to figure 9, a service technician may activate diagnostic functions of the household appliance in the service mode. A menu structure provided in the service mode may comprise a function to quit the service mode. In some embodiments, the service mode may be simply quit upon actuation of such function and operation may continue in the main operating mode, while in other embodiments, a query may be provided to the user to enter a code in order to leave the service mode.

Additionally, the service mode may be entered by actuating input elements according to a third predetermined input sequence (sequence 3). Such third predetermined input sequence preferably comprises or consists of the operation of physical control elements, such as buttons, keys, rotary knobs and the like. As an example, the start/stop button 33 and/or the on/off button 34 may be actuated a predetermined number of times, in a predetermined sequence, or for a predetermined amount of time while the rotary knob 32 is turned to a particular position. In particular, such third predetermined input sequence may not comprise the operation of any graphical input elements on the touchscreen 31, and it may also not comprise the query to enter a code as explained with respect to step S13. By providing such third predetermined input sequence, a service technician can enter the service mode even when the touchscreen 31 is inoperative or is broken. If in step S15, the input equals the sequence 3, the service mode is also entered (step S20).

If the entered code does not correspond to the second or third predetermined input sequence, it is checked in step S16 if the input equals a fourth predetermined input sequence. If this is the case, the last error code or error message that may for example be stored in an error memory of controller 40 is displayed to the user of the household appliance (step S17). The fourth predetermined input sequence may be a simple sequence, such as "1234", or may be a short sequence that is provided to the private user of the household appliance 100, for example in the operating manual. Accordingly, when the household appliance 100 has a malfunction, any user can retrieve the last error code so that the user can already provide a first indication of any error to a service technician when calling help.

If the user input does not correspond to any of the predetermined input sequences, operation continues in the main operating mode. It may thus be prevented that the private user of the household appliance accidentally enters the demo mode or the service mode during normal operation. Furthermore, two different environments are provided by the demo mode and the service mode, and access to these modes can be restricted to certain groups of people. Also, it is possible to separate functions in those two environments so that certain functions are only available to a certain group of people.

It should be clear that figure 4 only illustrates a fraction of the steps that may be performed by the household appliance 100 and the controller 40. Fig, 4 does for example not illustrate the turning on and turning off of the household appliance 100, or any steps of the operation of the household appliance in the main operating mode, which may certainly form part of a method of operating the household appliance 100. Furthermore, it should be clear that the steps may be performed in a sequence different to the sequence illustrated in figure 4. As an example, the entered code may first be checked if it corresponds to the second input sequence, and only thereafter be checked if it corresponds to the first input sequence. Also, some of the steps illustrated in figure 4 are optional, such as steps S16 and S17. It should also be clear that the method may be modified, for example by providing two distinct menu items and respective functions to enter the first and the second access restricted operating mode.

Figure 10 is a flow diagram illustrating a method according to a further embodiment. The method of figure 10 may form part of the method of figure 4 or may be performed separately. In step S31, the household appliance is operated in the main operating mode, for example after powering up the household appliance by pressing the on/off button 34. At step S32, the household appliance receives a user input to enter the demo mode. Entering the demo mode may occur as described with respect to figure 4, for example by selecting the function 51 illustrated in figure 5 and entering a respective code by means of the touchscreen 31 as illustrated in figure 6. Upon entering the demo mode, a flag is set in a non-volatile memory of the controller 40, the flag indicating that the demo mode is "on", i.e. is active (step S33). The household appliance is then operated in the first access restricted operating mode i.e. the demo mode (step S34).

When the household appliance was powered down and powered back up again (step S35), the method continues in step S36. Powering down and back up again of the household appliance may for example occur by switching off the household appliance using the on/off button 34 and switching the household appliance back on by using the same button 34. It is noted that in other embodiments, separate on/off buttons may be provided, the off button may be provided as a graphical input element on the touchscreen, or the household appliance may automatically turn off after a predetermined amount of time without user interaction or operation. The household appliance may also be powered down by disconnecting the household appliance from the power supply, for example by unplugging the household appliance from a power socket or by cutting the power supply to a local power grid to which the household appliance is connected, such as in a shop.

In step S36, after powering on the household appliance, it is checked if the flag is set to "on" in the non-volatile memory of the controller 40. If the flag is not set, the household appliance is operated in the main operating mode in accordance with step S31. Note that step 36 can generally also be performed when the household appliance is powered up and has not previously been operated in the demo mode, for example when powering down the household appliance directly from step S31 so that the flag is not set in the non-volatile memory. In other words, if the household appliance is operated in the main operating mode, powered down (for example by unplugging) and powered back up again (for example by plugging the household appliance back in and switching it on), step S36 can be performed, and upon detecting that the flag is not set (i.e. that the household appliance was not previously operated in the demo mode), the household appliance starts to operate in the main operating mode. Such possibility (reaching step S36 directly from step S31) is not shown for the purpose of a clear presentation.

If the flag is set to on in the non-volatile memory, indicating that the demo mode was active prior to powering down the household appliance, it is checked in step S37 if the power supply to the household appliance was disconnected, i.e. if the household appliance was unplugged or otherwise completely separated from the power supply via a power grid.

If this was not the case, then the method continues in step S34 by continuing to operate the household appliance in the demo mode. With such configuration, when the household appliance is exhibited in a shop and operates in a demo mode, a customer cannot accidentally leave the demo mode by switching off the household appliance and switching it back on using the on/off button 34 or other respective input elements.

If it is detected that the household appliance was disconnected from the power supply, then the "on" flag is removed from the non-volatile memory and the user is prompted to indicate whether he wants to leave the demo mode (step S38). An example of such user query is illustrated in fig 8. If the user wants to quit the demo mode, he has to provide a corresponding input within a predetermined amount of time. As an example, the query is displayed on the touchscreen 31 of the user interface 20 only for a predetermined amount of time, or the displayed query comprises a timer that counts backwards and the query is no longer displayed after expiry of the timer. The predetermined amount of time may for example be less than two minutes, less than one minute, or less than thirty seconds. As an example, the predetermined amount of time may be about ten seconds.

If a respective user input is received within the predetermined amount of time (decision step S39), for example by a user pressing the graphical input element "cancel" 62 illustrated in figure 8, the method continues in step S31 by operating the household appliance in the main operating mode. If no such input is received within the time limit, the flag is again set to "on" in the non-volatile memory (step S33) and the household appliance continues to operate in the demo mode (step S34).

Accordingly, when a household appliance is sold and thus unplugged from the power grid, the private user, when powering on the household appliance for the first time at home, will receive the query illustrated in figure 8 and is thus provided with a possibility to leave the demo mode without the need to enter any code or call a service technician. If the private user fails to enter a respective input, he can receive the query again by temporarily unplugging the household appliance and powering the household appliance up again.

On the other hand, if a shop owner powers down all household appliances of the shop after the shop is closed, for example by switching off a local power grid using a fuse or the like, and powers the household appliances back on the next morning before the shop opens, the household appliances will only show the query to leave the demo mode for a predetermined amount of time, and thereafter continue to operate in the demo mode. The shop owner does not need to enter the code or to perform any other actions to cause the household appliances to operate in the demo mode.

Checking if the household appliance was disconnected from the power supply in step S37 may for example be performed by providing a volatile memory within the controller 40, the volatile memory losing its state upon losing electrical power. Such volatile memory may continue to receive electrical power when the household appliance is only switched off and on using the on/off button 34. If a flag is set in such volatile memory, it can be checked in step S37 if the flag is set. If the flag is not set, the controller can determine that the household appliance was unplugged from the power supply as the volatile memory has lost its state. Such flag may be set additionally in step S33. Other possibilities for detecting in step S37 whether or not the household appliance was disconnected from the power supply certainly exist and can be used with embodiments of the method.

Further possibilities of leaving the demo mode may certainly be provided, for example by entering a respective code as described further above with respect to step S19 of figure 4. Also, the steps of the method may be performed in a different order, and the method may comprise additional or fewer steps. As an example, step S37 is optional, and the user may be queried if he wants to quit the demo mode every time the household appliance as powered on.

Embodiments of the household appliance and the respective method provide efficient and effective ways to operate the household appliance in different operating modes, and provide respective functions in the different operating modes that are available only to a predetermined group of people. Furthermore the entering and leaving of the operating modes is facilitated. A user can thus be provided with a user interface having a reduced complexity but high efficiency, and the operation of the household appliance is facilitated for the private user, for sales personal as well as for service technicians.

While specific embodiments are disclose herein, various changes and modifications can be made without departing from the scope of the invention. The present embodiments are to be considered in all respects as illustrative and non-restrictive, and all changes coming within the meaning and equivalency range of the appended claims are intended to be embraced therein.

### LIST OF REFERENCE SIGNS

- 100: household appliance
- 102: loading opening
- 103: door
- 104: handle
- 105: housing
- 110: main load
- 120: sensor
- 130: power supply unit
- 131: plug

- 20: user interface
- 21: LED
- 30: input unit
- 31: touchscreen
- 32: rotary knob
- 33: start/pause button
- 34: on/off button
- 36: graphical input element
- 40: controller
- 50: functions of main operating mode
- 51: menu item
- 60: functions of demo mode
- 61: laundry function
- 70: functions of service mode
- 71: diagnostic function
- S11-S21: method steps
- S31-S39: method steps

## Claims

1. A household appliance (100), comprising:
- a controller (40) to control the operation of the household appliance (100) in accordance with user selectable functions (50); and
- an input unit (30) providing input elements (31, 32, 33, 34) that are actuatable by a user of the household appliance (100), the input unit (30) being coupled to the controller (40);
wherein the household appliance (100) is operable in at least a main operating mode in which functions (50) of the household appliance are provided to a user for selection by actuation of an input element of the input unit, in a first access restricted operating mode and in a second access restricted operating mode,
wherein the controller (40) is configured to:
- in the first access restricted operating mode, provide at least one user selectable function (61) that upon selection causes the controller (40) to operate the household appliance in a different way than the selection of any function (50) provided in the main operating mode;
- in the second access restricted operating mode, provide at least one user selectable function (71) that upon selection causes the controller (40) to operate the household appliance in a different way than the selection of any function (50) provided in the main operating mode, wherein at least one of the functions provided in the second access restricted operating mode is different from the functions provided in the first access restricted operating mode;
- operate the household appliance (100) in the first access restricted operating mode upon receiving from the input unit (30) a user input that corresponds to the actuation of one or more input elements (31, 32, 33, 34) according to a first predetermined input sequence; and
- operate the household appliance (100) in the second access restricted operating mode upon receiving from the input unit (30) a user input that corresponds to the actuation of one or more input elements (31, 32, 33, 34) according to a second predetermined input sequence, which is different from the first predetermined input sequence
wherein the first access restricted operating mode and the second access restricted operating mode provide separate function lists or partially overlapping function lists and restrict access to the respective functions to different user groups.

2. The household appliance according to claim 1, wherein the user selectable functions that are provided in the first access restricted operating mode are different from the user selectable functions provided in the second access restricted operating mode.

3. The household appliance according to claim 1 or 2, wherein the controller (40) is configured to provide in the first access restricted operating mode at least one user selectable function that corresponds to a user selectable function provided in the second access restricted operating mode, said user selectable function being preferably a function that accesses an operation manual of the household appliance (100).

4. The household appliance according to any of the preceding claims, wherein the first predetermined input sequence and/or the second predetermined input sequence is a sequence of symbols, preferably comprising at least three, at least four or at least five symbols.

5. The household appliance according to any of the preceding claims, wherein the input unit (30) comprises a touchscreen (31), wherein the actuation of input elements according to the first predetermined input sequence and/or to the second predetermined input sequence comprises or consists of the actuation of graphical input elements (36) on the touchscreen in the respective sequence.

6. The household appliance according to any of the preceding claims, wherein the input unit (30) comprises a touchscreen (31) and at least one, preferably at least two physical input elements (32, 33, 34) separate from the touchscreen, and wherein the second predetermined input sequence comprises the actuation of graphical input elements (36) on the touchscreen (31), wherein the controller (40) is further configured to operate the household appliance (100) in the second access restricted operating mode upon receiving from the input unit (30) a user input that corresponds to the actuation of input elements (32, 33, 34) according to a third predetermined input sequence, wherein the third predetermined input sequence does not comprise the actuation of graphical input elements (36) provided on the touchscreen (31).

7. The household appliance according to any of the preceding claims, wherein the input unit (30) comprises a touchscreen (31), wherein the controller (40) is configured to provide in the main operating mode a menu structure on the touchscreen (31), wherein the menu items of the menu structure are associated with functions (50) of the household appliance (100) and are selectable by respective graphical input elements (36), wherein the menu structure comprises at least one menu item (51) upon the selection of which the controller (40) queries a user to enter the first or the second predetermined input sequence.

8. The household appliance according to any of the preceding claims, further comprising a screen, in particular a touchscreen (31), wherein the controller (40) is further configured to provide, upon receiving from the input unit (30) a user input that corresponds to the actuation of input elements (31, 32, 33, 34) according to a fourth predetermined input sequence, an error message on the screen that is indicative of a malfunction experienced by the household appliance (100) during operation.

9. The household appliance according to any of the preceding claims, wherein the first access restricted operating mode is a demonstration mode, wherein the at least one user selectable function (61) provided in the demonstration mode comprises a demonstration function, wherein the controller (40) is preferably configured to simulate, upon selection of the demonstration function (61), operating conditions of the household appliance (100) without operating power loads of the household appliance (100) that are associated with such operating conditions.

10. The household appliance according to any of the preceding claims, wherein the controller (40) is configured such that when the household appliance (100) operates in the first access restricted operating mode, the controller (40) stops operation in the first access restricted operating mode and enters the main operating mode upon receiving from the input unit (30) a user input that corresponds to the actuation of input elements (31, 32, 33, 34) according to a predetermined input sequence, in particular according to the first predetermined input sequence.

11. The household appliance according to any of the preceding claims, wherein the controller (40) is further configured such that when the household appliance (100) operates in the first access restricted operating mode and the household appliance (100) is powered down and powered up again, the controller (40) activates an input element (62), wherein actuation of the input element (62) by a user causes the controller (40) to leave the first access restricted operating mode and to operate the household appliance (100) in the main operating mode, wherein controller (40) activates the input element (62) only for a predetermined amount of time after which the controller (40) continues to operate the household appliance (100) in the first access restricted operating mode.

12. The household appliance according to claim 11, wherein the controller (40) is configured to activate the input element (62) only after determining that the household appliance (100) was disconnected from a power supply prior to said powering up of the household appliance (100).

13. The household appliance according to any of the preceding claims, wherein the controller (40) is configured such that when the household appliance (100) operates in the first access restricted operating mode, the controller (40) determines a time elapsed from the activation of the first access restricted operating mode, compares the elapsed time with a threshold and leaves the first access restricted operating mode if the elapsed time is greater than the threshold.

14. The household appliance according to any of the preceding claims, wherein the second access restricted operating mode is a service mode, wherein the at least one user selectable function provided in the service mode comprises at least one diagnostic function for testing the operability of a component (110) of the household appliance (100).

15. A method of operating a household appliance, the household appliance (100) comprising a controller (40) to control the operation of the household appliance (100) in accordance with user selectable functions and an input unit (30) providing input elements (31, 32, 33, 34) that are actuatable by a user of the household appliance (100), the input unit (30) being coupled to the controller (40), wherein the method comprises the steps of:
- operating the household appliance in a main operating mode in which functions (50) of the household appliance (100) are provided to a user for selection by actuation of an input element (31, 32, 33, 34) of the input unit (30);
- operating the household appliance (100) in a first access restricted operating mode upon receiving from the input unit (30) a user input that corresponds to the actuation of one or more input elements (31, 32, 33, 34) according to a first predetermined input sequence;
- in the first access restricted operating mode, providing at least one user selectable function (61) that upon selection causes the controller (40) to operate the household appliance in a different way than the selection of any function (50) provided in the main operating mode;
- operating the household appliance (100) in a second access restricted operating mode upon receiving from the input unit (30) a user input that corresponds to the actuation of one or more input elements (31, 32, 33, 34) according to a second predetermined input sequence, which is different from the first predetermined input sequence; and
- in the second access restricted operating mode, providing at least one user selectable function (71) that upon selection causes the controller (40) to operate the household appliance (100) in a different way than the selection of any function provided in the main operating mode, wherein at least one of the functions provided in the second access restricted operating mode is different from the functions provided in the first access restricted operating mode,
wherein the first access restricted operating mode and the second access restricted operating mode provide separate function lists or partially overlapping function lists and restrict access to the respective functions to different user groups.

## Patentansprüche

1. Haushaltsgerät (100), das Folgendes umfasst:
- eine Steuerung (40), um den Betrieb des Haushaltsgeräts (100) in Übereinstimmung mit vom Benutzer auswählbaren Funktionen (50) zu steuern; und
- eine Eingabeeinheit (30), die Eingabeelemente (31, 32, 33, 34) bereitstellt, die durch einen Benutzer des Haushaltsgeräts (100) betätigt werden können, wobei die Eingabeeinheit (30) mit der Steuerung (40) gekoppelt ist;
wobei das Haushaltsgerät (100) in wenigstens einer Hauptbetriebsart, in der Funktionen (50) des Haushaltsgeräts für einen Benutzer zum Auswählen durch Betätigen eines Eingabeelements der Eingabeeinheit bereitgestellt werden, in einer ersten zugriffsbeschränkten Betriebsart und einer zweiten zugriffsbeschränkten Betriebsart betrieben werden kann,
wobei die Steuerung (40) konfiguriert ist, die folgenden Schritte auszuführen:
- in der ersten zugriffsbeschränkten Betriebsart Bereitstellen wenigstens einer durch einen Benutzer auswählbaren Funktion (61), die bei der Auswahl bewirkt, dass die Steuerung (40) das Haushaltsgerät in einer anderen Weise als bei der Auswahl einer Funktion (50), die in der Hauptbetriebsart bereitgestellt wird, betreibt;
- in der zweiten zugriffsbeschränkten Betriebsart Bereitstellen wenigstens einer durch einen Benutzer auswählbaren Funktion (71), die bei der Auswahl bewirkt, dass die Steuerung (40) das Haushaltsgerät in einer anderen Weise als bei der Auswahl einer Funktion (50), die in der Hauptbetriebsart bereitgestellt wird, betreibt, wobei sich wenigstens eine der Funktionen, die in der zweiten zugriffsbeschränkten Betriebsart bereitgestellt werden, von den Funktionen unterscheidet, die in der ersten zugriffsbeschränkten Betriebsart bereitgestellt werden;
- Betreiben des Haushaltsgeräts (100) in der ersten zugriffsbeschränkten Betriebsart beim Erhalten einer Benutzereingabe von der Eingabeeinheit (30), die der Betätigung eines oder mehrerer Eingabeelemente (31, 32, 33, 34) in Übereinstimmung mit einer ersten vorgegebenen Eingabefolge entspricht; und
- Betreiben des Haushaltsgeräts (100) in der zweiten zugriffsbeschränkten Betriebsart beim Erhalten einer Benutzereingabe von der Eingabeeinheit (30), die der Betätigung eines oder mehrerer Eingabeelemente (31, 32, 33, 34) in Übereinstimmung mit einer zweiten vorgegebenen Eingabefolge entspricht, die sich von der ersten vorgegebenen Eingabefolge unterscheidet;
wobei die erste zugriffsbeschränkte Betriebsart und die zweite zugriffsbeschränkte Betriebsart getrennte Funktionslisten oder sich teilweise überschneidende Funktionslisten bereitstellen und einen Zugriff auf die entsprechenden Funktionen für verschiedene Benutzergruppen einschränken.

2. Haushaltsgerät nach Anspruch 1, wobei sich die durch einen Benutzer auswählbaren Funktionen, die in der ersten zugriffsbeschränkten Betriebsart bereitgestellt werden, von den durch einen Benutzer auswählbaren Funktionen, die in der zweiten zugriffsbeschränkten Betriebsart bereitgestellt werden, unterscheiden.

3. Haushaltsgerät nach Anspruch 1 oder 2, wobei die Steuerung (40) konfiguriert ist, in der ersten zugriffsbeschränkten Betriebsart wenigstens eine durch einen Benutzer auswählbare Funktion bereitzustellen, die einer durch einen Benutzer auswählbaren Funktion entspricht, die in der zweiten zugriffsbeschränkten Betriebsart bereitgestellt wird, wobei die durch einen Benutzer auswählbare Funktion vorzugsweise eine Funktion ist, die auf ein Betriebshandbuch des Haushaltsgeräts (100) zugreift.

4. Haushaltsgerät nach einem der vorhergehenden Ansprüche, wobei die erste vorgegebene Eingabefolge und/oder die zweite vorgegebene Eingabefolge eine Folge aus Symbolen ist, die vorzugsweise wenigstens drei, wenigstens vier oder wenigstens fünf Symbole umfasst.

5. Haushaltsgerät nach einem der vorhergehenden Ansprüche, wobei die Eingabeeinheit (30) einen Berührungsbildschirm (31) umfasst, wobei die Betätigung von Eingabeelementen in Übereinstimmung mit der ersten vorgegebenen Eingabefolge und/oder der zweiten vorgegebenen Eingabefolge die Betätigung von graphischen Eingabeelementen (36) auf dem Berührungsbildschirm in der entsprechenden Folge umfasst oder daraus besteht.

6. Haushaltsgerät nach einem der vorhergehenden Ansprüche, wobei die Eingabeeinheit (30) einen Berührungsbildschirm (31) und wenigstens ein, vorzugsweise wenigstens zwei äußere Eingabeelemente (32, 33, 34) getrennt von dem Berührungsbildschirm umfasst und wobei die zweite vorgegebene Eingabefolge die Betätigung von graphischen Eingabeelementen (36) auf dem Berührungsbildschirm (31) umfasst, wobei die Steuerung (40) ferner konfiguriert ist, das Haushaltsgerät (100) beim Erhalten einer Benutzereingabe von der Eingabeeinheit (30), die der Betätigung von Eingabeelementen (32, 33, 34) in Übereinstimmung mit einer dritten vorgegebenen Eingabefolge entspricht, in der zweiten zugriffsbeschränkten Betriebsart zu betreiben, wobei die dritte vorgegebene Eingabefolge die Betätigung von graphischen Eingabeelementen (36), die auf dem Berührungsbildschirm (31) bereitgestellt sind, nicht umfasst.

7. Haushaltsgerät nach einem der vorhergehenden Ansprüche, wobei die Eingabeeinheit (30) einen Berührungsbildschirm (31) umfasst, wobei die Steuerung (40) konfiguriert ist, in der Hauptbetriebsart eine Menüstruktur auf dem Berührungsbildschirm (31) bereitzustellen, wobei die Menüelemente der Menüstruktur Funktionen (50) des Haushaltsgeräts (100) zugeordnet sind und durch entsprechende graphische Eingabeelemente (36) ausgewählt werden können, wobei die Menüstruktur wenigstens ein Menüelement (51) umfasst, bei dessen Auswahl die Steuerung (40) einen Benutzer auffordert, die erste oder die zweite vorgegebene Eingabefolge einzugeben.

8. Haushaltsgerät nach einem der vorhergehenden Ansprüche, das ferner einen Bildschirm, insbesondere einen Berührungsbildschirm (31) umfasst, wobei die Steuerung (40) ferner konfiguriert ist, beim Erhalten einer Benutzereingabe von der Eingabeeinheit (30), die der Betätigung von Eingabeelementen (31, 32, 33, 34) in Übereinstimmung mit einer vierten vorgegebenen Eingabefolge entspricht, eine Fehlernachricht auf dem Bildschirm bereitzustellen, die eine Fehlfunktion anzeigt, die bei dem Haushaltsgerät (100) während des Betriebs auftritt.

9. Haushaltsgerät nach einem der vorhergehenden Ansprüche, wobei die erste zugriffsbeschränkte Betriebsart eine Demonstrationsbetriebsart ist, wobei die wenigstens eine durch einen Benutzer auswählbare Funktion (61), die in der Demonstrationsbetriebsart bereitgestellt wird, eine Demonstrationsfunktion umfasst, wobei die Steuerung (40) vorzugsweise konfiguriert ist, bei der Auswahl der Demonstrationsfunktion (61) Betriebsbedingungen des Haushaltsgeräts (100) ohne eine Betriebslast des Haushaltsgeräts (100), die zu derartigen Betriebsbedingungen gehört, zu simulieren.

10. Haushaltsgerät nach einem der vorhergehenden Ansprüche, wobei die Steuerung (40) so konfiguriert ist, dass dann, wenn das Haushaltsgerät (100) in der ersten zugriffsbeschränkten Betriebsart arbeitet, die Steuerung (40) beim Erhalten einer Benutzereingabe von der Eingabeeinheit (30), die der Betätigung von Eingabeelementen (31, 32, 33, 34) in Übereinstimmung mit einer vorgegebenen Eingabefolge, insbesondere in Übereinstimmung mit der ersten vorgegebenen Eingabefolge entspricht, den Betrieb in der ersten zugriffsbeschränkten Betriebsart stoppt und in die Hauptbetriebsart eintritt.

11. Haushaltsgerät nach einem der vorhergehenden Ansprüche, wobei die Steuerung (40) ferner so konfiguriert ist, dass dann, wenn das Haushaltsgerät (100) in der ersten zugriffsbeschränkten Betriebsart arbeitet und wenn das Haushaltsgerät (100) ausgeschaltet und erneut eingeschaltet wird, die Steuerung (40) ein Eingabeelement (62) aktiviert, wobei die Betätigung des Eingabeelements (62) durch einen Benutzer bewirkt, dass die Steuerung (40) die erste zugriffsbeschränkte Betriebsart verlässt und das Haushaltsgerät (100) in der Hauptbetriebsart betreibt, wobei die Steuerung (40) das Eingabeelement (62) nur für eine vorgegebene Zeitspanne aktiviert, nachdem die Steuerung (40) das Haushaltsgerät (100) fortgesetzt in der ersten zugriffsbeschränkten Betriebsart betreibt.

12. Haushaltsgerät nach Anspruch 11, wobei die Steuerung (40) konfiguriert ist, das Eingabeelement (62) nur nach der Feststellung aktiviert, dass das Haushaltsgerät (100) vor dem Einschalten des Haushaltsgeräts (100) von einem Netzteil getrennt war.

13. Haushaltsgerät nach einem der vorhergehenden Ansprüche, wobei die Steuerung (40) so konfiguriert ist, dass dann, wenn das Haushaltsgerät (100) in der ersten zugriffsbeschränkten Betriebsart arbeitet, die Steuerung (40) eine Zeit ermittelt, die seit der Aktivierung der ersten zugriffsbeschränkten Betriebsart verstrichen ist, die verstrichene Zeit mit einem Schwellenwert vergleicht und die erste zugriffsbeschränkte Betriebsart verlässt, falls die verstrichene Zeit größer als der Schwellenwert ist.

14. Haushaltsgerät nach einem der vorhergehenden Ansprüche, wobei die zweite zugriffsbeschränkte Betriebsart eine Service-Betriebsart ist, wobei die wenigstens eine durch einen Benutzer auswählbare Funktion, die in der Service-Betriebsart bereitgestellt wird, wenigstens eine Diagnosefunktion zum Testen der Betriebsfähigkeit eines Bauteils (110) des Haushaltsgeräts (100) umfasst.

15. Verfahren zum Betreiben eines Haushaltsgeräts, wobei das Haushaltsgerät (100) eine Steuerung (40) zum Steuern des Betriebs des Haushaltsgeräts (100) in Übereinstimmung mit von einem Benutzer auswählbaren Funktionen und eine Eingabeeinheit (30), die Eingabeelemente (31, 32, 33, 34) bereitstellt, die durch einen Benutzer des Haushaltsgeräts (100) betätigt werden können, umfasst, wobei die Eingabeeinheit (30) mit der Steuerung (40) gekoppelt ist, wobei das Verfahren die folgenden Schritte umfasst:
- Betreiben des Haushaltsgeräts in einer Hauptbetriebsart, in der Funktionen (50) des Haushaltsgeräts (100) für einen Benutzer zum Auswählen durch Betätigen eines Eingabeelements (31, 32, 33, 34) der Eingabeeinheit (30) bereitgestellt werden;
- Betreiben des Haushaltsgeräts (100) in einer ersten zugriffsbeschränkten Betriebsart beim Erhalten einer Benutzereingabe von der Eingabeeinheit (30), die der Betätigung eines oder mehrerer Eingabeelemente (31, 32, 33, 34) in Übereinstimmung mit einer ersten vorgegebenen Eingabefolge entspricht;
- in der ersten zugriffsbeschränkten Betriebsart Bereitstellen wenigstens einer durch einen Benutzer auswählbaren Funktion (61), die bei der Auswahl bewirkt, dass die Steuerung (40) das Haushaltsgerät in einer anderen Weise als bei der Auswahl einer Funktion (50), die in der Hauptbetriebsart bereitgestellt wird, betreibt,
- Betreiben des Haushaltsgeräts (100) in einer zweiten zugriffsbeschränkten Betriebsart beim Erhalten einer Benutzereingabe von der Eingabeeinheit (30), die der Betätigung eines oder mehrerer Eingabeelemente (31, 32, 33, 34) in Übereinstimmung mit einer zweiten vorgegebenen Eingabefolge, die sich von der ersten vorgegebenen Eingabefolge unterscheidet, entspricht; und
- in der zweiten zugriffsbeschränkten Betriebsart Bereitstellen wenigstens einer durch einen Benutzer auswählbaren Funktion (71), die bei der Auswahl bewirkt, dass die Steuerung (40) das Haushaltsgerät (100) in einer anderen Weise als bei der Auswahl einer Funktion, die in der Hauptbetriebsart bereitgestellt wird, betreibt, wobei sich wenigstens eine der Funktionen, die in der zweiten zugriffsbeschränkten Betriebsart bereitgestellt wird, von den Funktionen unterscheidet, die in der ersten zugriffsbeschränkten Betriebsart bereitgestellt werden,
wobei die erste zugriffsbeschränkte Betriebsart und die zweite zugriffsbeschränkten Betriebsart getrennte Funktionslisten oder sich teilweise überschneidende Funktionslisten bereitstellen und einen Zugriff auf die entsprechenden Funktionen für verschiedene Benutzergruppen einschränken.

## Revendications

1. Appareil ménager (100), comprenant :
- un dispositif de commande (40) pour commander le fonctionnement de l'appareil ménager (100) conformément à des fonctions sélectionnables par utilisateur (50) ; et
- une unité d'entrée (30) fournissant des éléments d'entrée (31, 32, 33, 34) qui sont actionnables par un utilisateur de l'appareil ménager (100), l'unité d'entrée (30) étant couplée au dispositif de commande (40) ;
dans lequel l'appareil ménager (100) peut être mis en fonctionnement dans au moins un mode de fonctionnement principal dans lequel des fonctions (50) de l'appareil ménager sont fournies à un utilisateur pour la sélection par l'intermédiaire de l'actionnement d'un élément d'entrée de l'unité d'entrée, dans un premier mode de fonctionnement à accès limité et dans un second mode de fonctionnement à accès limité,
dans lequel le dispositif de commande (40) est configuré pour :
- dans le premier mode de fonctionnement à accès limité, fournir au moins une fonction sélectionnable par utilisateur (61) qui, lors de la sélection, fait en sorte que le dispositif de commande (40) fasse fonctionner l'appareil ménager de manière différente de la sélection d'une quelconque fonction (50) fournie dans le mode de fonctionnement principal ;
- dans le second mode de fonctionnement à accès limité, fournir au moins une fonction sélectionnable par utilisateur (71) qui, lors de la sélection, fait en sorte que le dispositif de commande (40) fasse fonctionner l'appareil ménager de manière différente de la sélection d'une quelconque fonction (50) fournie dans le mode de fonctionnement principal, dans lequel au moins une des fonctions fournies dans le second mode de fonctionnement à accès limité est différente des fonctions fournies dans le premier mode de fonctionnement à accès limité ;
- faire fonctionner l'appareil ménager (100) dans le premier mode de fonctionnement à accès limité lors de la réception, à partir de l'unité d'entrée (30), d'une entrée utilisateur qui correspond à l'actionnement d'un ou de plusieurs éléments d'entrée (31, 32, 33, 34) selon une première séquence d'entrées prédéterminée ; et
- faire fonctionner l'appareil ménager (100) dans le second mode de fonctionnement à accès limité lors de la réception, à partir de l'unité d'entrée (30), d'une entrée utilisateur qui correspond à l'actionnement d'un ou de plusieurs éléments d'entrée (31, 32, 33, 34) selon une deuxième séquence d'entrées prédéterminée, qui est différente de la première séquence d'entrées prédéterminée,
dans lequel le premier mode de fonctionnement à accès limité et le second mode de fonctionnement à accès limité fournissent des listes de fonctions séparées ou des listes de fonctions partiellement superposées et limitent l'accès aux fonctions respectives à différents groupes d'utilisateurs.

2. Appareil ménager selon la revendication 1, dans lequel les fonctions sélectionnables par utilisateur qui sont fournies dans le premier mode de fonctionnement à accès limité sont différentes des fonctions sélectionnables par utilisateur fournies dans le second mode de fonctionnement à accès limité.

3. Appareil ménager selon la revendication 1 ou 2, dans lequel le dispositif de commande (40) est configuré pour fournir, dans le premier mode de fonctionnement à accès limité, au moins une fonction sélectionnable par utilisateur qui correspond à une fonction sélectionnable par utilisateur fournie dans le second mode de fonctionnement à accès limité, ladite fonction sélectionnable par utilisateur étant de préférence une fonction qui accède à un manuel d'utilisation de l'appareil ménager (100).

4. Appareil ménager selon l'une quelconque des revendications précédentes, dans lequel la première séquence d'entrées prédéterminée et/ou la deuxième séquence d'entrées prédéterminée est une séquence de symboles, de préférence comprenant au moins trois, au moins quatre ou au moins cinq symboles.

5. Appareil ménager selon l'une quelconque des revendications précédentes, dans lequel l'unité d'entrée (30) comprend un écran tactile (31), dans lequel l'actionnement d'éléments d'entrée selon la première séquence d'entrées prédéterminée et/ou la deuxième séquence d'entrées prédéterminée comprend ou est constitué de l'actionnement d'éléments d'entrée graphiques (36) sur l'écran tactile dans la séquence respective.

6. Appareil ménager selon l'une quelconque des revendications précédentes, dans lequel l'unité d'entrée (30) comprend un écran tactile (31) et au moins un, de préférence au moins deux éléments d'entrée physiques (32, 33, 34) séparés de l'écran tactile, et dans lequel la deuxième séquence d'entrées prédéterminée comprend l'actionnement d'éléments d'entrée graphiques (36) sur l'écran tactile (31), dans lequel le dispositif de commande (40) est en outre configuré pour faire fonctionner l'appareil ménager (100) dans le second mode de fonctionnement à accès limité lors de la réception, à partir de l'unité d'entrée (30), d'une entrée utilisateur qui correspond à l'actionnement d'éléments d'entrée (32, 33, 34) selon une troisième séquence d'entrées prédéterminée, dans lequel la troisième séquence d'entrées prédéterminée ne comprend pas l'actionnement d'éléments d'entrée graphiques (36) prévus sur l'écran tactile (31).

7. Appareil ménager selon l'une quelconque des revendications précédentes, dans lequel l'unité d'entrée (30) comprend un écran tactile (31), dans lequel le dispositif de commande (40) est configuré pour fournir, dans le mode de fonctionnement principal, une structure de menu sur l'écran tactile (31), dans lequel les articles de menu de la structure de menu sont associés à des fonctions (50) de l'appareil ménager (100) et sont sélectionnables par des éléments d'entrée graphiques respectifs (36), dans lequel la structure de menu comprend au moins un article de menu (51) lors de la sélection duquel le dispositif de commande (40) demande à un utilisateur d'entrer la première ou la deuxième séquence d'entrées prédéterminée.

8. Appareil ménager selon l'une quelconque des revendications précédentes, comprenant en outre un écran, en particulier un écran tactile (31), dans lequel le dispositif de commande (40) est en outre configuré pour fournir, lors de la réception, à partir de l'unité d'entrée (30), d'une entrée utilisateur qui correspond à l'actionnement d'éléments d'entrée (31, 32, 33, 34) selon une quatrième séquence d'entrées prédéterminée, un message d'erreur sur l'écran qui est indicatif d'un mauvais fonctionnement subi par l'appareil ménager (100) durant le fonctionnement.

9. Appareil ménager selon l'une quelconque des revendications précédentes, dans lequel le premier mode de fonctionnement à accès limité est un mode de démonstration, dans lequel l'au moins une fonction sélectionnable par utilisateur (61) fournie dans le mode de démonstration comprend une fonction de démonstration, dans lequel le dispositif de commande (40) est de préférence configuré pour simuler, lors de la sélection de la fonction de démonstration (61), des conditions de fonctionnement de l'appareil ménager (100) sans charges de puissance de fonctionnement de l'appareil ménager (100) qui sont associées à de telles conditions de fonctionnement.

10. Appareil ménager selon l'une quelconque des revendications précédentes, dans lequel le dispositif de commande (40) est configuré de telle sorte que, lorsque l'appareil ménager (100) fonctionne dans le premier mode de fonctionnement à accès limité, le dispositif de commande (40) arrête le fonctionnement dans le premier mode de fonctionnement à accès limité et entre dans le mode de fonctionnement principal lors de la réception, à partir de l'unité d'entrée (30), d'une entrée utilisateur qui correspond à l'actionnement d'éléments d'entrée (31, 32, 33, 34) selon une séquence d'entrées prédéterminée, en particulier selon la première séquence d'entrées prédéterminée.

11. Appareil ménager selon l'une quelconque des revendications précédentes, dans lequel le dispositif de commande (40) est en outre configuré de telle sorte que, lorsque l'appareil ménager (100) fonctionne dans le premier mode de fonctionnement à accès limité et l'appareil ménager (100) est mis hors tension et mis sous tension à nouveau, le dispositif de commande (40) active un élément d'entrée (62), dans lequel l'actionnement de l'élément d'entrée (62) par un utilisateur fait en sorte que le dispositif de commande (40) quitte le premier mode de fonctionnement à accès limité et fasse fonctionner l'appareil ménager (100) dans le mode de fonctionnement principal, dans lequel dispositif de commande (40) active l'élément d'entrée (62) seulement pendant une période prédéterminée après laquelle le dispositif de commande (40) continue de faire fonctionner l'appareil ménager (100) dans le premier mode de fonctionnement à accès limité.

12. Appareil ménager selon la revendication 11, dans lequel le dispositif de commande (40) est configuré pour activer l'élément d'entrée (62) seulement après avoir déterminé que l'appareil ménager (100) a été disconnecté d'une alimentation électrique avant ladite mise sous tension de l'appareil ménager (100).

13. Appareil ménager selon l'une quelconque des revendications précédentes, dans lequel le dispositif de commande (40) est configuré de telle sorte que, lorsque l'appareil ménager (100) fonctionne dans le premier mode de fonctionnement à accès limité, le dispositif de commande (40) détermine un temps s'étant écoulé depuis l'activation du premier mode de fonctionnement à accès limité, compare le temps s'étant écoulé à un seuil et quitte le premier mode de fonctionnement à accès limité si le temps s'étant écoulé est supérieur au seuil.

14. Appareil ménager selon l'une quelconque des revendications précédentes, dans lequel le second mode de fonctionnement à accès limité est un mode de service, dans lequel l'au moins une fonction sélectionnable par utilisateur fournie dans le mode de service comprend au moins une fonction de diagnostic pour tester la capacité de fonctionnement d'un composant (110) de l'appareil ménager (100).

15. Procédé de fonctionnement d'un appareil ménager, l'appareil ménager (100) comprenant un dispositif de commande (40) pour commander le fonctionnement de l'appareil ménager (100) conformément à des fonctions sélectionnables par utilisateur et une unité d'entrée (30) fournissant des éléments d'entrée (31, 32, 33, 34) qui sont actionnables par un utilisateur de l'appareil ménager (100), l'unité d'entrée (30) étant couplée au dispositif de commande (40), dans lequel le procédé comprend les étapes de :
- la mise en fonctionnement de l'appareil ménager dans un mode de fonctionnement principal dans lequel des fonctions (50) de l'appareil ménager (100) sont fournies à un utilisateur pour la sélection par l'intermédiaire de l'actionnement d'un élément d'entrée (31, 32, 33, 34) de l'unité d'entrée (30) ;
- la mise en fonctionnement de l'appareil ménager (100) dans un premier mode de fonctionnement à accès limité lors de la réception, à partir de l'unité d'entrée (30), d'une entrée utilisateur qui correspond à l'actionnement d'un ou de plusieurs éléments d'entrée (31, 32, 33, 34) selon une première séquence d'entrées prédéterminée ;
- dans le premier mode de fonctionnement à accès limité, la fourniture d'au moins une fonction sélectionnable par utilisateur (61) qui, lors de la sélection, fait en sorte que le dispositif de commande (40) fasse fonctionner l'appareil ménager de manière différente de la sélection d'une quelconque fonction (50) fournie dans le mode de fonctionnement principal ;
- la mise en fonctionnement de l'appareil ménager (100) dans un second mode de fonctionnement à accès limité lors de la réception, à partir de l'unité d'entrée (30), d'une entrée utilisateur qui correspond à l'actionnement d'un ou de plusieurs éléments d'entrée (31, 32, 33, 34) selon une deuxième séquence d'entrées prédéterminée, qui est différente de la première séquence d'entrées prédéterminée ; et
- dans le second mode de fonctionnement à accès limité, la fourniture d'au moins une fonction sélectionnable par utilisateur (71) qui, lors de la sélection, fait en sorte que le dispositif de commande (40) fasse fonctionner l'appareil ménager (100) de manière différente de la sélection d'une quelconque fonction fournie dans le mode de fonctionnement principal, dans lequel au moins une des fonctions fournies dans le second mode de fonctionnement à accès limité est différente des fonctions fournies dans le premier mode de fonctionnement à accès limité,
dans lequel le premier mode de fonctionnement à accès limité et le second mode de fonctionnement à accès limité fournissent des listes de fonctions séparées ou des listes de fonctions partiellement superposées et limitent l'accès aux fonctions respectives à différents groupes d'utilisateurs.
